# FASCICULE DE BREVET EUROPEEN

(11) **EP 1 786 604 B1**
(45) Date de publication et mention de la délivrance du brevet: **28.05.2008**
(21) Numéro de dépôt: 05805581.5
(22) Date de dépôt: 08.09.2005
(51) Int. Cl.: B27M 1/06, C12G 3/06

(54) **PROCEDE ET DISPOSITIF DE TRAITEMENT PAR LA CHALEUR DE LAMES DE BOIS DESTINEES A FORMER DES INSERTS AROMATIQUES**
VERFAHREN UND VORRICHTUNG ZUR WÄRMEBEHANDLUNG VON HOLZSTÄBEN FÜR AROMAEINLAGEN
METHOD AND DEVICE FOR HEAT TREATMENT OF WOODEN STAVES DESIGNED TO FORM AROMATIC INSERTS

(30) Priorité: 09.09.2004 FR 0409547
(43) Date de publication de la demande: 23.05.2007
(73) Titulaire: HEDONIS, 45720 Coullons (FR)
(72) Inventeur: SCHNEIDERWIND, Jacques, F-45500 GIEN (FR)
(74) Mandataire: Puiroux, Guy
(86) Numéro de dépôt international: PCT/FR2005/002239
(87) Numéro de publication internationale: WO 2006/030115

(56) Documents cités:
- EP-A- 1 408 104
- US-A- 783 819
- US-A- 2 507 685

## Description

La présente invention concerne un procédé et un dispositif de traitement par la chaleur de lames de bois, ou inserts aromatiques, destinées à être immergées dans des cuves de vinification, de façon à apporter à leur contenu certains arômes et saveurs spécifiques. Un tel procédé et dispositif est décrit par le document US-A-783819.

On sait que les douelles constituant les tonneaux destinés à contenir du vin subissent au cours de leur procédé de fabrication un traitement, dénommé bousinage, consistant à soumettre leur face interne à une chaleur élevée de façon à réaliser une transformation de la structure du bois qui, sans atteindre le brûlage, permet aux arômes et saveurs contenus dans celui-ci de se libérer au contact du vin.

On a proposé de réaliser ce même type de traitement en faisant appel à des pièces de bois que l'on chauffe au préalable et que l'on immerge ensuite dans un vin dans lequel on souhaite libérer les arômes et saveurs contenus dans ces bois traités. On connaît ainsi divers procédés de traitement du bois tels que le «toasting», la torréfaction, le passage au four etc... ces différents procédés possédant tous l'inconvénient de traiter uniformément le bois dans la masse.

L'un des buts de la présente invention est de proposer un procédé de traitement générant un effet thermique qui soit progressif dans l'épaisseur du bois et homogène à la surface de celui-ci ainsi qu'il en est d'un tonneau après qu'il ait subi sa seconde chauffe.

Une difficulté inhérente au traitement du bois par la chaleur est que l'effet de celle-ci est très difficile à doser si l'on souhaite ne pas donner au vin une couleur et un arôme artificiels mais, au contraire conférer à celui-ci des qualités organoleptiques en tout point identiques à celles obtenues lorsque l'on procède à son stockage dans des tonneaux de type classique, notamment en chêne.

La présente invention a pour but de proposer un procédé et un dispositif permettant de réaliser un traitement de telles pièces de bois qui, à la fois, permet d'être facilement mis en oeuvre sur le plan industriel tout en conservant la qualité et les avantages procurés par le traitement classique traditionnel appliqué dans le domaine de la tonnellerie. Ainsi, le procédé et le dispositif suivant l'invention permettent de reproduire les mêmes effets que les techniques traditionnelles, notamment en ce qui concerne la nature du combustible utilisé, la qualité des radiations émises lors du chauffage ainsi que leur mode de répartition sur les lames de bois.

La présente invention a ainsi pour objet un procédé de traitement de lames de bois destinées à être mises en contact ultérieurement avec un milieu alcoolique tel que notamment du vin, de façon à apporter à celui-ci des arômes et des saveurs, caractérisé en ce qu'il comporte les étapes consistant à :
- garnir, au moins partiellement, la face interne d'un support métallique avec lesdites lames de bois,
- traiter par la chaleur les lames de bois au moyen d'un brasero disposé au centre de ce support.

Préférentiellement le chauffage du brasero sera assuré par du bois et, préférentiellement par un bois de la même essence que celui à traiter. On pourra ainsi utiliser pour le chauffage les copeaux et déchets résultant de l'élaboration des lames ce qui est intéressant à la fois au niveau de la qualité du résultat obtenu et au niveau de l'économie réalisée.

Suivant l'invention le traitement des lames de bois pourra comprendre deux phases, correspondant à des positions inversées de bas en haut des lames et/ou à des positions inversées recto-verso de celles-ci.

De façon intéressante on pourra mesurer la température atteinte par la face des lames exposées à la chaleur du brasero, par la mesure de la température de la face opposée à celle-ci, notamment au moyen d'un dispositif de mesure par faisceau infrarouge.

La présente invention a également pour objet un dispositif de traitement de lames de bois destinées à être mises en contact ultérieurement avec un milieu alcoolique tel que notamment du vin, de façon à apporter à celui-ci des arômes et des saveurs, caractérisé en ce qu'il est constitué d'un support métallique apte à assurer un maintien vertical des lames suivant une distribution cylindrique d'axe yy', qui est ouvert au moins partiellement à ses parties supérieure et inférieure et au centre duquel est disposé un brasero dont le combustible est constitué de bois.

Suivant l'invention les moyens aptes à assurer le maintien des lames seront tels que le plan médian de chacune de celles-ci passera sensiblement par ledit axe yy'.

Le brasero pourra être constitué d'un élément tubulaire métallique percé sur sa périphérie d'une série d'orifices à l'intérieur duquel on disposera des éléments combustibles constitués de déchets de bois et notamment de bois de même nature que celui constituant les lames à traiter. Le brasero sera tel qu'il s'étendra sur une hauteur égale à environ les deux tiers de celle du support métallique. Par ailleurs son diamètre sera égal à environ le tiers du diamètre interne de ce dernier.

Suivant l'invention on disposera au centre de l'élément tubulaire constituant l'enveloppe du brasero des barres métalliques qui, en certaines zones, viendront en contact avec la surface de l'élément tubulaire. Ces barres métalliques jouent un rôle de répartition de la chaleur et permettent de véhiculer celle-ci à partir du centre du brasero vers la périphérie de son enveloppe, ce qui permet de créer sur toute la hauteur du brasero une répartition contrôlée de la chaleur délivrée par celui-ci.

La présente invention a également pour objet une installation de traitement automatisé de lames de bois au moyen de dispositifs tels que décrits précédemment qui sont disposés suivant un cercle au centre duquel est monté à rotation un bras dont au moins une extrémité est pourvue de moyens de préhension du dispositif permettant d'assurer à la fois le soulèvement et le retournement du support. Préférentiellement les deux extrémités du bras sont pourvues des moyens de préhension, ce qui permet de limiter les rotations de celui-ci pour effectuer une fonction déterminée.

On décrira ci-après à titre d'exemple non limitatif, une forme d'exécution de la présente invention, en référence au dessin annexé sur lequel :
La figure 1 est une vue en perspective d'un dispositif de bousinage suivant l'invention.
La figure 2 est une vue de dessus du dispositif représenté sur la figure 1,
La figure 3 est une vue en perspective d'un brasero utilisé dans le dispositif de traitement représenté sur les figures 1 et 2,
La figure 4 est une vue en perspective éclatée de l'élément récepteur suivant l'invention.
Les figures 5a à 5c représentent respectivement une lame après traitement et avant retournement de haut en bas, la même lame après retournement, et la même lame après le second traitement.
La figure 6 est une vue partielle en coupe des moyens de mesure de la température des lames en cours de traitement.
La figure 7 est une vue de dessus d'une installation mettant en oeuvre des modules de traitement du type de ceux représentés sur les figures 1 à 6.

Le dispositif suivant l'invention qui est représenté sur les figues 1 à 7 ci-jointes constitue un module de traitement 1 qui comprend essentiellement un élément récepteur 2 assurant une disposition et une répartition des lames de bois à traiter 5 suivant une surface cylindrique d'axe yy', au centre de laquelle est disposé un brasero 7.

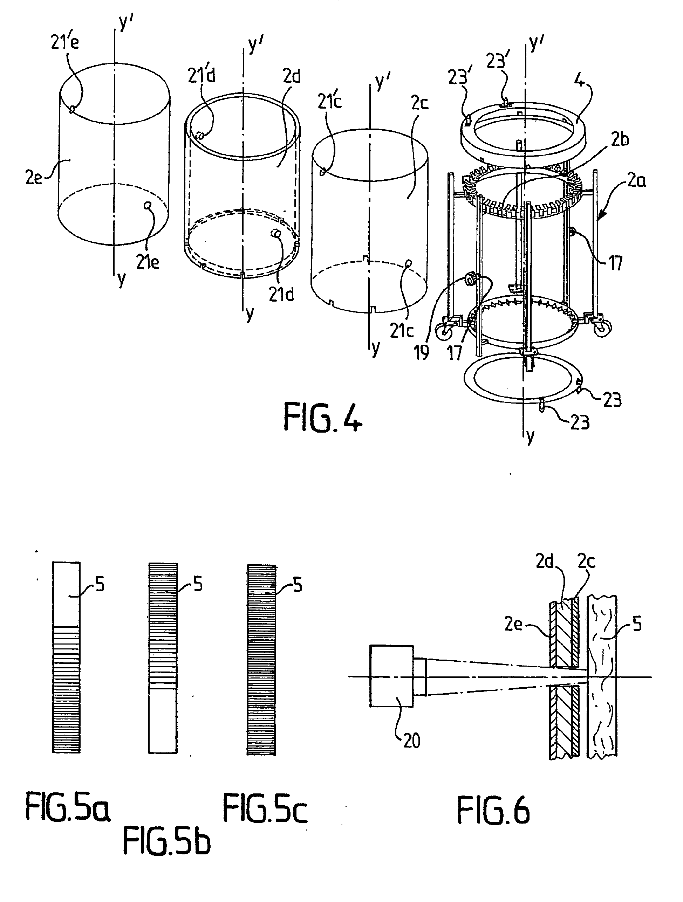

L'élément récepteur 2, ainsi que représenté sur la figure 4, est constitué d'une structure support 2a pourvue à sa partie supérieure de clips 2b qui assurent le positionnement et le maintien des lames 5 suivant une disposition telle que le plan médian de chacune des lames 5 passe par l'axe central yy'. La structure support 2a assure également le maintien d'un carénage interne métallique 2c de forme cylindrique et d'axe yy' qui entoure les lames 5 et qui est lui-même recouvert d'un manchon isolant 2d, par exemple en laine de roche, l'ensemble se terminant par un carénage externe 2e.

Le brasero central 7 est escamotable et est constitué d'un élément tubulaire métallique 8, maintenu vertical par trois pieds 9, qui est percé sur sa périphérie de trous d'alimentation en air de combustion 11, qui se distribuent de façon périodique aussi bien dans le sens vertical que dans le sens horizontal.

La partie inférieure du brasero 7 est pourvue d'une grille 12 destinée à recevoir un produit combustible, constitué de bois qui peut se présenter sous diverses formes, et notamment sous celle de plaquettes, de granulés ou de chutes calibrées, et dont la combustion va fournir la chaleur nécessaire à la transformation thermique des lames de bois 5. Sous la grille 12 est disposé un tiroir 13 destiné à recueillir les cendres de combustion.

Des moyens d'indexation sont prévus qui permettent d'assurer facilement et rapidement un positionnement relatif concentrique correct du brasero 7 et de l'élément récepteur 2. Une telle indexation peut être assurée par l'intermédiaire du sol, et à cet effet la structure support 2a peut être pourvue de doigts inférieurs 23 (et de leurs symétriques après retournement 23') destinés à être positionnés dans des cavités complémentaires du sol et, de même, le brasero 7 sera pourvu du même type de repères qui peuvent être constitués par ses pieds 9 prenant place dans des avaloirs prévus dans le sol.

Le mode de chauffage utilisé suivant la présente invention est essentiel dans la mesure où il se révèle particulièrement intéressant notamment à deux égards, à savoir d'une part en ce qu'il contribue au parfum et au goût délivré par le produit final et d'autre part en ce qu'il permet d'assurer la valorisation de bois qui, par ailleurs, constitueraient en fait des déchets et qui, par eux-mêmes, n'ont qu'une valeur marchande très faible.

Une difficulté rencontrée dans la mise en oeuvre efficace du procédé et du dispositif suivant l'invention est de délivrer, au moyen d'une source naturelle de chaleur du type brasero, une chaleur dont la répartition est contrôlée avec un profil de distribution déterminé par exemple suivant la hauteur des lames 5. Pour assurer un tel contrôle de la répartition verticale de la chaleur on a disposé à l'intérieur du brasero 7 des barres métalliques transversales 15 dont le rôle est de récupérer de la chaleur existant au centre du foyer pour la conduire sur les parois externes de l'élément tubulaire 8, dans les parties de celui-ci qui, lors de la combustion, s'avèrent être les moins chaudes. Il s'agit bien entendu notamment des parties supérieures du brasero 7.

Ces barres transversales 15 jouent ainsi le rôle d'éléments répartiteurs de la chaleur à l'intérieur du brasero 7 et permettent de contrôler la distribution de la chaleur sur la hauteur de celui-ci et d'obtenir le profil de chauffage suivant la hauteur souhaité. A cet effet les barres 15 seront en bon contact thermique avec l'élément tubulaire 8, notamment par soudage sur celui-ci. Préférentiellement, afin de minimiser les effets de la dilatation d'une paroi vers la paroi opposée les barres transversales 15 seront scindées en leur milieu formant entre elles un espace e.

Préférentiellement les parties supérieure et inférieure des lames 5 seront recouvertes de deux couronnes 4a et 4b destinées à former un confinement permettant de mieux contrôler le chauffage à la fois aux extrémités des lames et suivant l'épaisseur de celles-ci.

En cours de l'opération de traitement, et afin d'assurer une répartition optimale des effets de la chaleur sur les lames de bois 5, on fait appel à des moyens permettant d'effectuer un retournement à 180°, à savoir de haut en bas, de l'élément récepteur 2. Ainsi, en contrôlant le profil de distribution de la chaleur suivant la hauteur du brasero 7, notamment au moyen des barres de contrôle 15, on fait en sorte, lors d'une première phase de chauffage, de traiter le bois suivant un profil se distribuant de façon décroissante du bas vers le haut ainsi que représenté sur la figure 5a. Ainsi, après le retournement, on reproduit un profil de traitement complémentaire, ainsi que représenté sur la figure 5b, mais dans le sens opposé, si bien que la lame de bois est traitée de façon uniforme sur toute sa longueur, ainsi que représenté sur la figure 5c.

On a constaté qu'une bonne répartition du traitement sur la longueur d'une lame 5 à traiter était favorisée lorsque la partie supérieure du brasero 7 atteignait environ les 2/3 de la hauteur h de l'élément récepteur 2.

La mise en oeuvre du procédé suivant l'invention peut s'effectuer de façon manuelle ou préférablement par des moyens automatisés. On décrira ci-après les différentes étapes du procédé suivant l'invention.

On commencera par mettre en place les lames 5 sur la structure support 2a en les fixant au moyen des clips 2b. Pour ce faire on disposera une première lame 5 en contact avec une butée de positionnement latéral, puis les autres lames, qui pourront avoir des largeurs différentes les unes des autres, seront disposées en contact avec les lames adjacentes, chacune d'elles étant maintenue en position par les clips 2b.

Puis on mettra en place les enveloppes 2c, 2d, et 2e puis les couronnes 4a et 4b et on disposera le brasero 7 au centre du dispositif. Après allumage de celui-ci on procédera à la première partie du traitement des lames 5. On soulèvera ensuite la structure support 2a afin de la dégager du brasero 7 puis on la retournera de bas en haut afin de compléter le traitement. A cet effet la structure support 2a est pourvue de deux éléments de maintien 17 qui sont destinés à prendre place dans des fourches de moyens élévateurs, non représentés sur le dessin. L'un de ces éléments se prolonge radialement par un pignon 19 destiné à venir en prise avec un pignon d'entraînement en rotation assurant ainsi le basculement à 180° de la structure support 2a. On pourrait bien entendu escamoter vers le haut le brasero 7 afin de permettre le retournement de l'élément récepteur 2.

Le dispositif suivant l'invention comporte des moyens permettant d'assurer une surveillance de la température prise par les lames au cours du chauffage. On comprend que, compte tenu de la disposition de ces dernières à l'intérieur de la structure support 2a et de la présence du brasero 7 une mesure des températures sur la face frontale des lames en cours de traitement est extrêmement difficile. Suivant l'invention il est proposé d'assurer une telle mesure au travers des lames 5 elles-mêmes. En effet connaissant la nature et l'épaisseur de celles-ci il est aisé, à partir de la température du verso de la lame 5, d'en déduire la température du recto de celle-ci.

La mesure de la température du verso d'une lame 5 est effectuée par exemple au moyen d'une sonde infrarouge. A cet effet un orifice de mesure, respectivement 21c, 21e et 21d a été prévu à la fois dans les carénages interne et externe respectifs 2c et 2e et dans le manchon isolant 2d au travers desquels une sonde de mesure 20 envoie son faisceau sur la face verso de la lame 5 ainsi que représenté sur la figure 6. Bien entendu un second.orifice, respectivement 21'c, 21'e et 21'd sur ces mêmes éléments est également prévu afin qu'après le retournement de l'élément récepteur 2 le même faisceau infrarouge soit en mesure de venir frapper une face verso d'une lame 5.

Il conviendra ensuite de démonter les lames 5 afin de les retourner dans le sens recto-verso si l'on souhaite que le traitement soit effectué au travers de celles-ci.

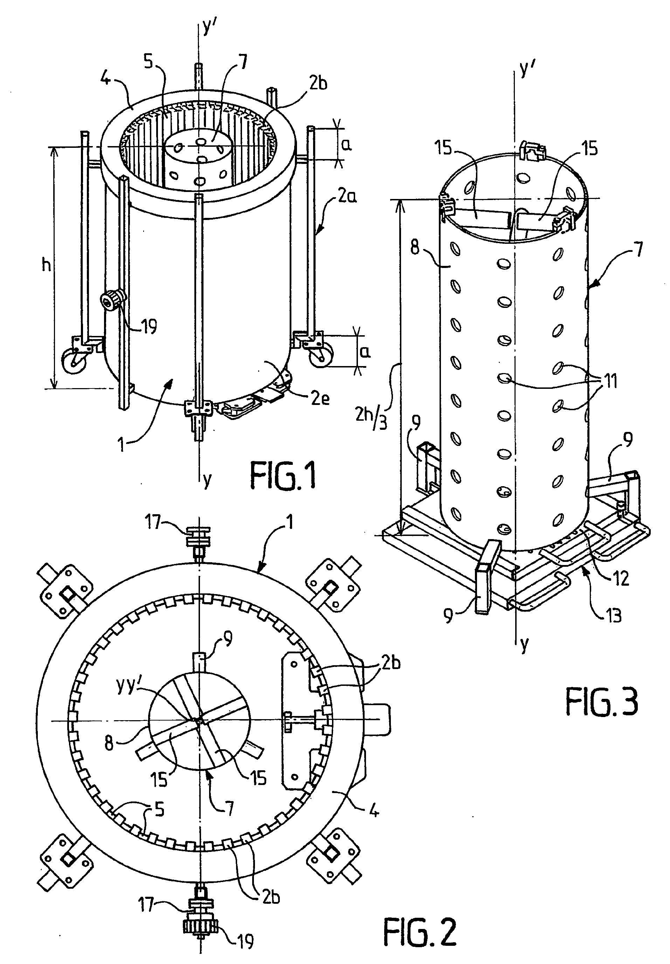

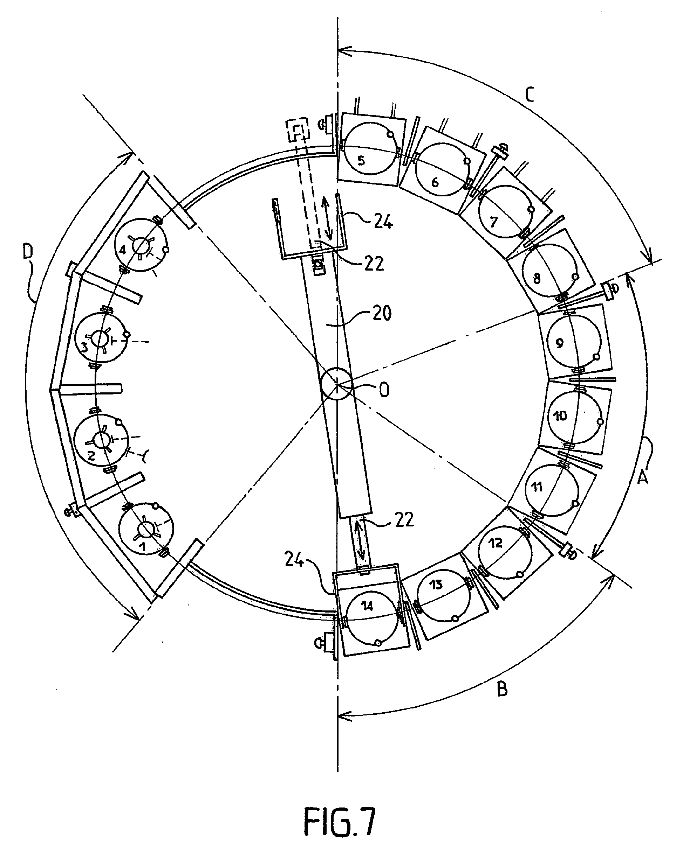

Bien entendu, sur le plan industriel, on réalisera un traitement simultané sur plusieurs modules de traitement 1 et ceci à l'aide de moyens automatisés. De tels moyens d'automation pourront être très divers et être notamment constitués par l'exemple de mise en oeuvre représenté sur la figure 7 dans lequel on assure un traitement simultané de plusieurs modules du type de celui représenté sur les figures 1 à 6.

Les modules 1 sont distribués circulairement en différentes zones de travail correspondant à différents secteurs déterminé.s de centre O, à savoir un secteur de chargement A, un secteur de déchargement B, un secteur de retournement C recto-verso des lames, et un secteur de traitement D. Un bras diamétral 20 est monté à rotation autour du centre O, et ce bras comporte à chacune de ses extrémités, un bras secondaire 22 qui est monté coulissant horizontalement et verticalement dans celui-ci, ce bras 22 se terminant par un élément support en U 24 en mesure de se saisir et de se dessaisir des éléments récepteurs 2 et d'effectuer, en cours de processus leur retournement à 180°. On comprend dans ces conditions que suivant sa position angulaire, le bras 20 peut venir saisir chacun des éléments récepteurs 2 se trouvant dans la zone de chargement A pour l'amener ensuite dans la zone de traitement D, puis celui-ci une fois effectué, dans la zone de retournement B pour le ramener, de nouveau dans la zone de traitement D et enfin pour le délivrer ensuite dans la zone de déchargement B.

## Revendications

1. Procédé de traitement de lames de bois (5) destinées à être mises en contact ultérieurement avec un milieu alcoolique tel que notamment du vin, de façon à apporter à celui-ci des arômes et des saveurs, **caractérisé en ce qu'**il comporte les étapes consistant à :
- garnir, au moins partiellement, la face interne d'un support métallique (2) avec lesdites lames de bois (5),
- traiter par la chaleur les lames de bois (5) au moyen d'un brasero (7) disposé au centre de ce support (2).

2. Procédé suivant la revendication 1 **caractérisé en ce que** le brasero (7) est chauffé avec du bois et notamment un bois de la même essence que celui à traiter.

3. Procédé suivant l'une des revendications précédentes **caractérisé en ce que** le traitement des lames de bois (5) comprend au moins deux phases, correspondant à des positions inversées de bas en haut des lames.

4. Procédé suivant l'une des revendications précédentes **caractérisé en ce que** le traitement des lames de bois (5) comprend au moins deux phases, correspondant à des positions inversées recto-verso des lames.

5. Procédé suivant l'une des revendications précédentes **caractérisé en ce que** l'on mesure la température atteinte par la face des lames (5) exposées à la chaleur du brasero (7), par la mesure de la température de la face opposée à celle-ci.

6. Procédé suivant la revendication 5 **caractérisé en ce que** l'on effectue la mesure de température au moyen d'un dispositif de mesure (20) par faisceau infrarouge.

7. Dispositif de traitement de lames de bois (5) destinées à être mises en contact ultérieurement avec un milieu alcoolique, tel que notamment du vin, de façon à apporter à celui-ci des arômes et des saveurs, **caractérisé en ce qu'**il est constitué d'un support métallique (2) apte à assurer un maintien vertical des lames (5) suivant une distribution cylindrique d'axe yy', qui est ouvert au moins partiellement à ses parties supérieure et inférieure au centre duquel est disposé un brasero (7) dont le combustible est constitué de bois.

8. Dispositif suivant la revendication 7 **caractérisé en ce que** les moyens aptes à assurer le maintien des lames (5) sont tels que le plan médian de chacune de celles-ci passe sensiblement par ledit axe yy'.

9. Dispositif suivant l'une des revendications 7 ou 8 **caractérisé en ce que** le brasero (7) s'étend sur une hauteur égale à environ les deux tiers de celle (h) du support métallique (2).

10. Dispositif suivant l'une des revendications 7 à 9 **caractérisé en ce que** le diamètre du brasero (7) est égal à environ le quart du diamètre interne du support (2).

11. Dispositif suivant l'une des revendications 7 à 10 **caractérisé en ce que** le brasero (7) comporte des barres radiales (15) soudées à sa paroi interne destinées à véhiculer la chaleur du centre de celui-ci vers ses parois.

12. Dispositif suivant l'une des revendications 7 à 11 **caractérisé en ce que** le support métallique (2) et le brasero (7) comportent des moyens d'indexation (23,23',9) aptes à assurer leur positionnement concentrique.

13. Installation de traitement automatisé de lames de bois (5) au moyen d'un dispositif suivant l'une des revendications 7 à 12, **caractérisée en ce qu'**elle comprend une série desdits dispositifs disposés suivant un cercle au centre (O) duquel est monté à rotation un bras (20) dont au moins une extrémité est pourvue de moyens de préhension (24) du dispositif permettant d'assurer à la fois le soulèvement et le retournement du support (2).

14. Installation suivant la revendication 13 **caractérisée en ce que** les deux extrémités du bras (20) sont pourvues des moyens de préhension (24).

## Claims

1. A method for treating wooden slats (5) intended to be brought into contact later with an alcohol-based medium such as wine in particular, so as to transfer aromas and flavours to the latter, **characterised in that** it includes steps consisting of:
- at least partially lining the inner face of a metal medium (2) with the said wooden slats (5),
- heat-treating the wooden slats (5) by means of a brazier (7) located at the centre of this medium (2).

2. The method according to claim 1, **characterised in that** the brazier (7) is heated with wood, and in particular with a wood of the same species as that to be treated.

3. The method according to any of the preceding claims, **characterised in that** the treatment of the wooden slats (5) includes at least two phases, corresponding to slat positions inverted from top to bottom.

4. The method according to any of the preceding claims, **characterised in that** the treatment of the wooden slats (5) includes at least two phases, corresponding to slat positions reversed from front to back.

5. The method according to any of the preceding claims, **characterised in that** the temperature attained by the face of the slats- (5) exposed to the heat of the brazier (7) is measured by measuring the temperature of the face opposite to the latter.

6. The method according to claim 5, **characterised in that** the temperature is measured by means of an infrared-beam measuring device (20).

7. A device for the treatment of wooden slats (5) intended to be brought into contact later with an alcohol medium, such as wine in particular, so as to transfer aromas and flavours to the latter, **characterised in that** it is composed of a metal medium (2) adapted to provide vertical support for the slats (5) in a cylindrical configuration on axis yy', which is at least partially open at its upper and lower parts, at the centre of which is located a brazier (7) that is fired by wood.

8. The device according to claim 7, **characterised in that** the means adapted to hold the slats (5) are such that the median plane of each of the latter passes substantially through the said axis yy'.

9. The device according to any of claims 7 or 8, **characterised in that** the brazier (7) extends to a height of about two-thirds that (h) of the metal medium (2).

10. The device according to any of claims 7 to 9, **characterised in that** the diameter of the brazier (7) is equal to about a quarter of the inside diameter of the metal medium (2).

11. The device according to any of claims 7 to 10, **characterised in that** the brazier (7) includes radial bars (15) welded to its inner wall and intended to convey the heat from the centre of the latter to its walls.

12. The device according to any of claims 7 to 11, **characterised in that** the metal medium (2) and the brazier (7) include indexing means (23, 23', 9) adapted to ensure their concentrically positioning.

13. An installation for the automated treatment of wooden slats (5) by means of a device according to any of claims 7 to 12, **characterised in that** it includes a series of the said devices located in a circle at the centre (O) of which is mounted a rotating arm (20) of which at least one end is fitted with means for gripping (24) the device, so that the medium (2) can be both lifted and turned over (2).

14. The installation according to claim 13, **characterised in that** the two ends of the arm (20) are fitted with gripping means (24).

## Patentansprüche

1. Verfahren zur Behandlung von Holzlamellen (5), die später mit einem alkoholischen Medium, wie beispielsweise Wein, in Kontakt gebracht werden sollen, so dass diesem Aromastoffe und Geschmacksstoffe geliefert werden, **dadurch gekennzeichnet, dass** es die folgenden Schritte umfasst:
- die Innenfläche eines Metallträgers (2) wird zumindest teilweise mit diesen Holzlamellen (5) belegt,
- die Holzlamellen (5) werden mittels eines Kohlenofens (7) wärmebehandelt, der in der Mitte dieses Trägers (2) angeordnet ist.

2. Verfahren nach Anspruch 1, **dadurch gekennzeichnet, dass** der Kohlenofen (7) mit Holz beheizt wird, und insbesondere mit einem Holz derselben Art wie das zu behandelnde Holz.

3. Verfahren nach einem der vorhergehenden Ansprüche, **dadurch gekennzeichnet, dass** die Behandlung der Holzlamellen (5) mindestens zwei Phasen beinhaltet, die von unten nach oben umgekehrten Positionen der Lamellen entsprechen.

4. Verfahren nach einem der vorhergehenden Ansprüche, **dadurch gekennzeichnet, dass** die Behandlung der Holzlamellen (5) mindestens zwei Phasen beinhaltet, die Vorderseite-Rückseite-Umkehrpositionen der Lamellen entsprechen.

5. Verfahren nach einem der vorhergehenden Ansprüche, **dadurch gekennzeichnet, dass** man die Temperatur, die von der Seite der Lamellen (5) erreicht wird, die der Wärme des Kohlenofens (7) ausgesetzt ist, durch Messen der Temperatur der zu dieser entgegengesetzten Seite misst.

6. Verfahren nach Anspruch 5, **dadurch gekennzeichnet, dass** man die Temperatur mittels einer Infrarotstrahlungsmessvorrichtung (20) misst.

7. Vorrichtung zur Behandlung von Holzlamellen (5), die später mit einem alkoholischen Medium, wie beispielsweise Wein, in Kontakt gebracht werden sollen, so dass diesem Aromastoffe und Geschmacksstoffe geliefert werden, **dadurch gekennzeichnet, dass** sie aus einem Metallträger (2) gebildet ist, der geeignet ist, für ein vertikales Halten der Lamellen (5) folgend einer zylindrischen Verteilung mit Achse yy' zu sorgen, der zumindest teilweise an seinem Ober- und Unterteil offen ist, und in dessen Mitte ein Kohlenofen (7) angeordnet ist, dessen Brennstoff durch Holz gebildet wird.

8. Vorrichtung nach Anspruch 7, **dadurch gekennzeichnet, dass** die Einrichtungen, die geeignet sind, die Lamellen (5) zu halten, derart sind, dass die Mittelebene einer jeder von diesen im Wesentlichen durch die Achse yy' hindurch verläuft.

9. Vorrichtung nach einem der Ansprüche 7 oder 8, **dadurch gekennzeichnet, dass** der Kohlenofen (7) sich auf eine Höhe erstreckt, die ungefähr gleich groß wie zwei Drittel der Höhe (h) des Metallträgers (2) ist.

10. Vorrichtung nach einem der Ansprüche 7 bis 9, **dadurch gekennzeichnet, dass** der Durchmesser des Kohlenofens (7) ungefähr so groß wie ein Viertel des Innendurchmessers des Trägers (2) ist.

11. Vorrichtung nach einem der Ansprüche 7 bis 10, **dadurch gekennzeichnet, dass** der Kohlenofen (7) an seiner Innenwand angeschweißte radiale Stäbe (15) aufweist, welche die Wärme von seiner Mitte zu seinen Wänden transportieren sollen.

12. Vorrichtung nach einem der Ansprüche 7 bis 11, **dadurch gekennzeichnet, dass** der Metallträger (2) und der Kohlenofen (7) Indexierungseinrichtungen (23, 23', 9) aufweisen, die geeignet sind, für deren konzentrische Positionierung zu sorgen.

13. Anlage zur automatisierten Behandlung von Holzlamellen (5) mittels einer Vorrichtung nach einem der Ansprüche 7 bis 12, **dadurch gekennzeichnet, dass** sie eine Reihe von diesen Vorrichtungen aufweist, die einem Kreis folgend angeordnet sind, in dessen Mitte (O) ein Arm (20) drehbar angebracht ist, dessen eines Ende mit Greifeinrichtungen (24) für die Vorrichtung versehen ist, die gleichzeitig das Anheben und das Herumschwenken des Trägers (2) gestatten.

14. Anlage nach Anspruch 13, **dadurch gekennzeichnet, dass** beide Enden des Arms (20) mit Greifeinrichtungen (24) versehen sind.
